# EUROPEAN PATENT APPLICATION

(11) **EP 1 255 402 A1**
(43) Date of publication of application: **06.11.2002**
(21) Application number: 01308656.6
(22) Date of filing: 10.10.2001
(51) Int. Cl.: H04N 3/185

(54) **Power-supplying device for an electron gun**

(30) Priority: 04.05.2001 KR 2001024453
(71) Applicant: SAMSUNG ELECTRONICS CO., LTD., Suwon-City, Kyungki-do (KR)
(72) Inventor: Lee, Sang-young, Div.of Visual Display, Paldal-ku, Suwon-City, Kyungki-do (KR); Kwon, Joong-yeol, Kwonseon-ku, Suwon-city, Kyungki-do (KR); Ahn, Jung-hyun, Changan-ku, Suwon city, Kyungki-do (KR)
(74) Representative: Geary, Stuart Lloyd

(57) **Abstract**

Disclosed is a power-supplying device for an electron gun in a CDT provided with an FBT comprising a focus voltage output terminal and an acceleration voltage output terminal, further comprising a power supplying part supplying a predetermined reference voltage; a focus voltage detection part detecting a focus voltage of the focus voltage output terminal; and a focus voltage boost part boosting the focus voltage of the focus voltage output terminal in case that the focus voltage detected by the focus voltage detection part is lower than the reference voltage of the power supplying part. With this configuration, it is possible to recover the voltage of the focus voltage output terminal dropped according to the grid discharging of the electron gun in the CDT to the normal voltage

## Description

The present invention relates in general to a power-supplying device for an electron gun in a CDT (Color Display Tube), and more particularly, to a power-supplying device for an electron gun in a CDT, which is provided with a FBT (Fly Back Transformer) including an acceleration voltage output terminal and a focus voltage output terminal being connected to an acceleration grid and a focus grid, respectively.

A CDT is a picture display apparatus having a cathode-ray tube in which electron beams are emitted in accordance with a video signal from a signal source. The electron beams are scanned across a screen area coated with fluorescent material to generate light so as to produce a visible image on the CDT's screen.

Generally, the CDT produces a colour picture by emitting three electron beams from respective electron guns and directing the beams at the appropriate phosphors through a shadow mask. A high voltage (HV+) is used to accelerate the beams.

Each electron gun has typically comprises a control grid for controlling the emitted electron beam, an acceleration grid for accelerating the electron beam controlled by the control grid and a focus grid focusing the electron beam.

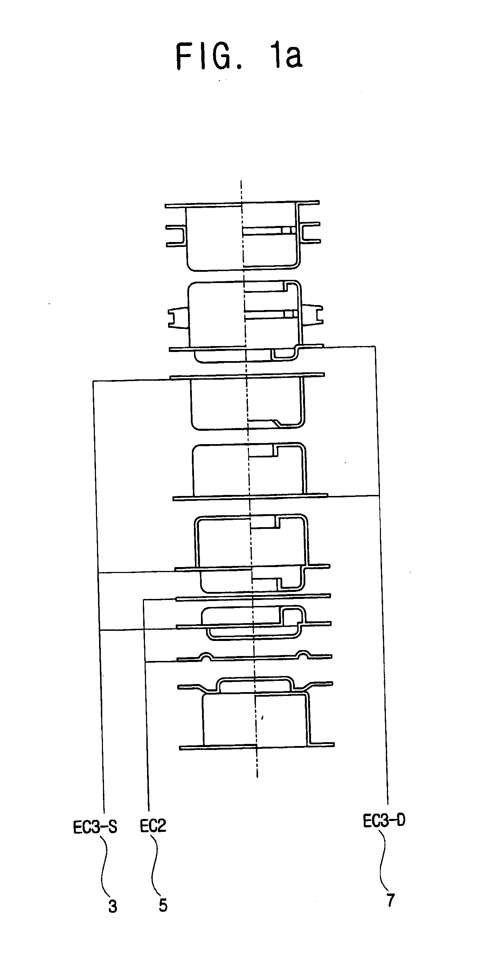

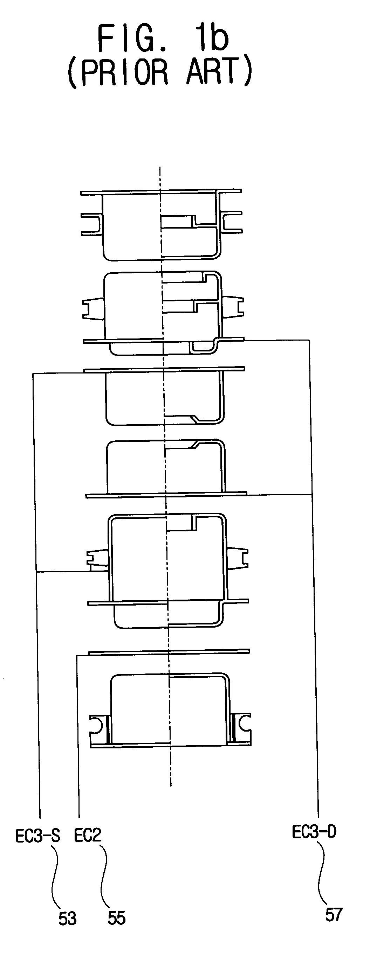

Recently, the S-CXO (Super Common Extended Field Ovallens) CDT electron gun has been developed, which has an improved focus-function. As illustrated in Figure 1a, an S-CXO CDT electron gun has more EC3-S (G3) and EC2 (G2) grids than a conventional electron gun (Figure 1b which includes grids EC3-D (G4), EC3-S (G3), EC3-D (G4), EC3-S (G3) and EC2 (G2), arranged in sequence.

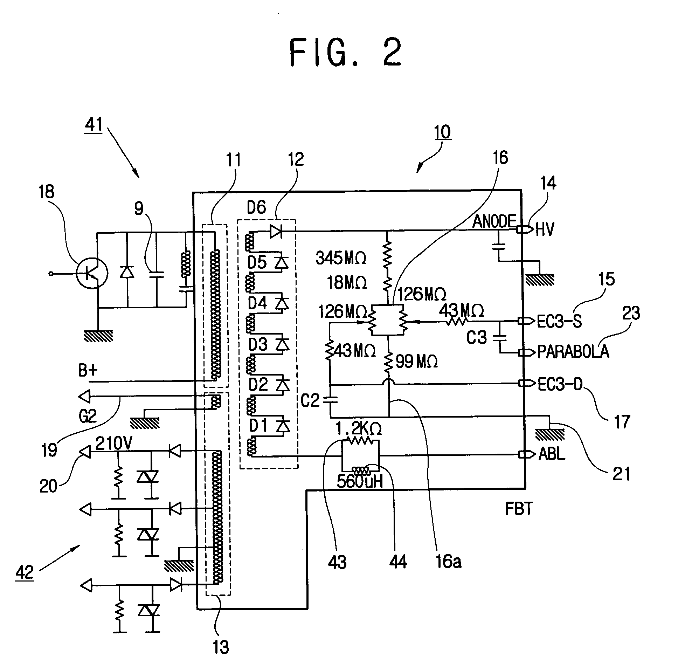

Figure 2 shows the FBT and associated circuitry for supplying high voltage to the S-CXO CDT electron gun.

Referring Figure 2, the circuitry associated specifically with the FBT 10 is surrounded by a bold line, a FBT driving circuit 41 is illustrated to the left upper part of the FBT 10, and a power supplying circuit 42 supplying power from the FBT 10 to an acceleration grid (G2) is illustrated to the left lower part of the FBT 10.

The FBT driving circuit 41 applies a voltage B+ to the FBT 10 by an on/off switching operation of a high voltage transistor 18. This causes an alternating current to flow in the primary winding of the FBT 41. Consequently, a high voltage is induced in the first secondary winding 12 of the FBT 10. The voltage induced in the first secondary winding 12 is divided by a plurality of high voltage distribution resistances 16 to provide bias voltages for a static focus grid (G3) and a dynamic focus grid (G4) of the electron gun.

A high voltage is also induced to a second secondary winding 13. The voltage induced in the second secondary winding 13 is applied to the acceleration grid (G2) of the electron gun.

Referring to Figures 1a and 2, an acceleration voltage output terminal 19 and focus voltage output terminals 15, 17 in FBT 10 of Figure 2 have high impedances, but on the other hand, high electric potentials. Thus, potential drops can occur due to discharges owing to a change of atmospheric pressure outside the CDT or to impurities. Furthermore, because a focus grid 3 surrounds the acceleration grid 5, the voltage of the acceleration voltage output terminal 19 fluctuates unstably depending upon the voltage change of the focus voltage output terminals 15, 17. Accordingly, the screen becomes dim, or an iridescent phenomenon may appear on the screen.

Accordingly, the present invention has been made keeping in mind the above-described shortcoming and user's need, and an object of the present invention is to provide a power supplying device for an electron gun in a CDT, which can recover voltage of a focus voltage output terminals in FBT dropped by a discharge in the electron gun into normal voltage.

This and other objects of the present invention may be accomplished by the provision of a power-supplying device for an electron gun in a CDT provided with an FBT comprising a focus voltage output terminal and an acceleration voltage output terminal, further comprising a power supplying part supplying a predetermined reference voltage; a focus voltage detection part detecting a focus voltage of the focus voltage output terminal; a focus voltage boost part boosting the focus voltage of the focus voltage output terminal in case that the focus voltage detected by the focus voltage detection part is lower than the reference voltage of the power supplying part.

Here, the focus voltage detection part includes a detection resistance connected in series to the focus voltage output terminal, and can easily detect the focus voltage.

The focus voltage boost part comprises a voltage boost circuit provided with a resistance and a capacitor between the power supplying part and the focus voltage detection part, charging therein the reference voltage from the power supplying part, to thereby recover loss of the focus voltage.

Desirably, the power supplying part comprises a vertical and dynamic waveform power-supplying part of the FBT.

The focus voltage boost part includes a diode cutting off an inverse electric current from the focus voltage detection part to the power supplying part.

To the acceleration voltage output terminal is provided a by-pass capacitor for maintaining an acceleration voltage, and the voltage of the acceleration voltage output terminal is prevented from fluctuating due to the voltage change of the focus voltage output terminals.

According to another aspect of the present invention, the above and other objects may be also achieved by the provision of a method for recover a normal focus voltage of an electron gun in a CDT, comprising the steps of detecting a focus voltage applied to a focus grid of the electron gun; comparing the focus voltage with a predetermined reference voltage; and boosting the focus voltage applied to the focus grid in case that the focus voltage is lower than the reference voltage.

The reference voltage is voltage of a vertical and dynamic waveform power-supplying terminal applied to the focus grid.

The step of boosting the focus voltage comprises the step of supplying voltage charged by a capacitor and a resistance between the focus grid and the vertical and dynamic waveform power-supplying terminal to the focus grid, thereby effectively boosting the focus voltage.

An embodiment of the present invention will now be described, by way of example, with reference to Figures 1a, 2 and 3 of the accompanying drawings, in which:
Figure 1a is a grid arrangement diagram of an S-CXO electron gun;
Figure 1b is a grid arrangement diagram of a conventional CXO electron gun;
Figure 2 is a circuit diagram of a unified high voltage deflection FBT of the power-supplying device according to the present invention; and
Figure 3 is a circuit diagram of a power-supplying device according to the present invention.

Referring to Figure 1a, an S-CXO (Super Common Extended Field Ovallens) electron gun in a CDT has seven grids, EC3-D 7, EC3-S 3, EC3-D 7, EC3-S 3, EC2 5, EC3-S 3, and EC2 5, arranged in sequence. The EC3-D grid 7 is a dynamic focus grid (G4), the EC3-S grid 3 is a static focus grid, and the EC2 grid 5 is an acceleration grid (G2).

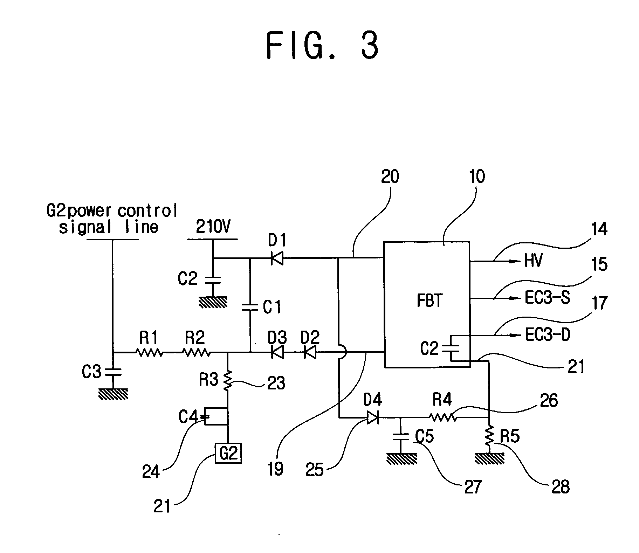

Referring to Figures 2 and 3, a circuit, which is shown surrounded by a bold line, for the FBT 10 boosts the input voltage for supply to the electron gun in the CDT. An FBT driving circuit 41 is shown beside the left upper part of the FBT 10 and a power supplying circuit 42, for supplying power from the FBT 10 to the acceleration grid (G2), is shown beside the left lower part of the FBT 10.

The primary winding 11 of the FBT is energised by an alternating current produced by a high-voltage switching transistor and a capacitor 9. As a result, a high voltage is generated across a first secondary winding 12 of the FBT 10.

The high voltage 14 generated across the first secondary coil 12 of the FBT 10 is divided by a plurality of high voltage distribution resistances 16 and respective voltages so produced are applied to a static focus grid (G3) and a dynamic focus grid (G4) of the electron gun.

A high voltage is also generated across a second secondary winding 13. The voltage generated across the second secondary winding 13 is applied to the acceleration grid (G2) of the electron gun, via a circuit comprising high-voltage rectifiers D2, D3 (Figure3) and a capacitor C1 for smoothing the high voltage pulses at the anode of the rectifier D3. The voltage applied to the acceleration grid (G2) is about 540V.

The high voltage distribution resistances 16 are connected in series with the first secondary winding 12 of the FBT 10 of Figure 2, in order to apply voltage to the focus grids G3, G4. The high voltage is divided by the high voltage distribution resistances 16 and applied to respective focus grids G3, G4. A line branching from a static focus voltage output terminal 15 outputs a parabola-type voltage for performing dynamic focusing through a capacitor C3. The other end of the first secondary winding 12 of the FBT 10 is connected via a resistance 43 and a coil 44, which are connected in parallel, to an ABL (Auto Bright Limiter) circuit (not shown) controlling a screen voltage by detecting the brightness of the screen.

A line 16a, connected to the high-voltage distribution resistances 16 and an acceleration voltage output terminal 21 of a dynamic focus voltage output terminal 17, as shown in Figure 3, is connected to a focus voltage detection resistance 28 which is also coupled to ground. The voltage applied to the dynamic focus grid (G4) is detected by measuring the voltage across the focus voltage detection resistance 28. In the case that the applied voltage is normal, the voltage detected across the focus voltage detection resistance 28 is about 6kV.

In Figure 3, the line to which the focus voltage detection resistance 28 is connected, is connected to the power-supplying terminal 20 supplying vertical and dynamic waveform power to a parabola waveform output terminal 23 of the FBT 10. In the line connecting the power-supplying terminal 20 and the focus voltage detection resistance 28 are provided a diode D4, having its anode connected to the focus voltage detection resistance 28, for blocking reverse electric current, and a voltage boost part comprising a resistance 26 and a capacitor 27. When the voltage of the focus voltage detection resistance 28 has dropped and is equal to the voltage of the power-supplying terminal 20, the voltage boost part 26, 27 boosts the voltage of the focus voltage detection resistance 28.

In the case that the electron gun in the CDT is normally operated, because the voltage of the focus voltage detection resistance 28 is higher than the voltage of the power-supplying terminal 20, the diode 25 cuts off an electric current and the voltage boost part 26, 27 is charged by the voltage of the dynamic focus voltage detection resistance 28. However, if the voltage of the focus voltage output terminal 17 drops according to the grid discharging of the electron gun in the CDT, the charged voltage in the voltage boost part 26, 27 and the voltage of the power-supplying terminal 20 of Figure 3 allow the focus voltage output terminal 17 to be boosted, to thereby return to the normal voltage.

In Figure 3, the end part of the acceleration voltage output terminal 19 of the FBT, 10 connected with the acceleration grid (G2), is connected to a resistance 23 and a by-pass capacitor 24. Because the voltage to which the by-pass capacitor 24 is charged maintains the acceleration voltage, the voltage of the acceleration voltage output terminal 19 is prevented from fluctuating due to the voltage change of the focus voltage output terminals 17.

With this configuration, when the voltage of the dynamic focus voltage output terminal 17 of FBT 10 is dropped, the voltage to which the capacitor 27 is charged maintains the dynamic focus voltage at the normal voltage. Moreover, the voltage of the acceleration voltage output terminal is prevented from fluctuating according to the voltage change of the focus voltage output terminal owing to the acceleration grid of the electron gun in the CDT and to the structure of the focus grid.

The above-description is refers to a unified high voltage deflection power-supplying device but the present invention can be also applied to a separated one.

In addition, in the above-described embodiment, the power supplying part is connected to the vertical and dynamic power-supplying terminal of the FBT, for supplying a predetermined reference voltage, but it may be connected to a separate power-supplying device.

As described above, the present invention provides the power-supplying device for the electron gun in the CDT, which can recover the voltage of the focus voltage output terminal dropped according to the grid discharging of the electron gun in the CDT to the normal voltage.

## Claims

1. A power-supplying device for an electron gun in a CDT provided with an FBT comprising a focus voltage output terminal and an acceleration voltage output terminal, further comprising:
a power supplying part supplying a predetermined reference voltage;
a focus voltage detection part detecting a focus voltage of the focus voltage output terminal; and
a focus voltage boost part boosting the focus voltage of the focus voltage output terminal in case that the focus voltage detected by the focus voltage detection part is lower than the reference voltage of the power supplying part.

2. The device according to claim 1, wherein the focus voltage detection part includes a detection resistance connected in series to the focus voltage output terminal.

3. The device according to claim 1, wherein the focus voltage boost part comprises a voltage boost circuit provided with a resistance and a capacitor between the power supplying part and the focus voltage detection part, charging therein the reference voltage from the power supplying part.

4. The device according to claim 3, wherein the power supplying part comprises a vertical and dynamic waveform power-supplying part of the FBT.

5. The device according to claim 1, wherein the focus voltage boost part includes a diode cutting off an inverse electric current from the focus voltage detection part to the power supplying part.

6. The device according to claim 1, wherein to the acceleration voltage output terminal is provided a by-pass capacitor for maintaining an acceleration voltage.

7. A method for recover a normal focus voltage of an electron gun in a CDT, comprising the steps of:
detecting a focus voltage applied to a focus grid of the electron gun;
comparing the focus voltage with a predetermined reference voltage; and
boosting the focus voltage applied to the focus grid in case that the focus voltage is lower than the reference voltage.

8. The method according to claim 7, wherein the reference voltage is voltage of a vertical and dynamic waveform power-supplying terminal applied to the focus grid.

9. The method according to claim 8, wherein the step of boosting the focus voltage comprises the step of supplying voltage charged by a capacitor and a resistance between the focus grid and the vertical and dynamic waveform power-supplying terminal to the focus grid.

10. A power supply circuit for an electron gun, the circuit comprising a flyback transformer and means for providing a focus voltage at a focus voltage output from the voltage across a secondary winding of the flyback transformer, **characterised by** means for maintaining the focus voltage during transient periods of increased focus current.

11. A power supply circuit according to claim 10, wherein said means for providing a focus voltage comprises a potential divider for dividing the voltage across said secondary winding, including a resistor connected to ground.

12. A power supply circuit according to claim 11, wherein the means for maintaining the focus voltage comprises a unidirectional current path from a voltage source to the "hot" end of said ground-connected resistor for maintaining the voltage across the ground-connected resistor above a predetermined minimum value.

13. A power supply circuit according to claim 12, wherein the unidirectional current path comprises a rectifier in series with a further resistor, and a capacitor is connected between the junction between rectifier and the further resistor and ground.
